# EUROPEAN PATENT APPLICATION

(11) **EP 2 988 227 A2**
(43) Date of publication of application: **24.02.2016**
(21) Application number: 15186318.0
(22) Date of filing: 27.03.2008
(51) Int. Cl.: G06F 17/24, G06F 17/27

(54) **APPARATUS AND METHODS FOR IDENTIFYING TEXT BLOCKS ON A WIRELESS DEVICE**

(30) Priority: 24.12.2007 US 963888
(62) Divisional of application: 08103018.1
(71) Applicant: Qualcomm Incorporated, San Diego, CA 92121-1714 (US)
(72) Inventor: Johnsgard, Todd J., San Diego, CA California 92121-1714 (US)
(74) Representative: Dunlop, Hugh Christopher

(57) **Abstract**

The invention related to a method of editing content on a wireless device (12), comprising: displaying content (22) comprising a plurality of data items (24) and a cursor (26) having a position (28) with respect to the content (22); generating one or more data aggregations (34) based on applying at least one data aggregation rule (38) to the content (22), wherein each data aggregation rule (38) is applied to the content (22) based on the position (28) of the cursor (26) to group data items (24) in the content (22) into data aggregations (34); and displaying the one or more data aggregations (34).

## Description

### BACKGROUND

The described aspects generally relate to wireless communications devices and computer networks. More particularly, the described aspects relate to apparatus and methods for selecting and editing portions of content on a wireless device.

Many wireless devices lack the user interface tools available on a desktop computer, e.g. a mouse. Without these user interface tools, wireless devices having content editing capabilities provide methods for selecting and editing portions of content being displayed that users have found to be difficult, confusing, and/or cumbersome. For example, these known methods often involve the user making multiple keystrokes to select and manipulate a portion of content being displayed. Thus, users often do not utilize the methods provided, or are frustrated by their complexity.

Further, the information within the content displayed on a wireless device often may be desired to be used in more than one wireless device application. Due to the cumbersomeness and complexity of known editing methods, however, it is not convenient for the user to select and edit portions of content being displayed on a wireless device and transfer the content between applications, e.g. between two or more emails, a calendar application, a web browser, and/or instant messaging.

Accordingly, it would be advantageous to provide improved apparatus and methods that allow for selecting and editing the content on a wireless device.

### BRIEF SUMMARY

In one aspect, a wireless device comprises memory, a processor in communication with the memory, and an output device in communication with the processor and the memory, wherein the output device comprises a display operable to present content comprising a plurality of data items and a cursor having a position within the content. Further, the wireless device comprises an element recognizer stored in the memory and executable by the processor, wherein the element recognizer comprises at least one data aggregation rule that defines aggregations of data items. The element recognizer is executable to generate a content element list of at least one data aggregation when the at least one data aggregation rule is applied to the content, wherein each data aggregation comprises a group of at least one of the plurality of data items, and wherein the at least one data aggregation rule determines an inclusion and an order of each data aggregation within the content element list based on the position of the cursor. Further, the element recognizer is operable to initiate presentation of the content element list on the display. Additionally, the wireless device comprises a manipulator stored in the memory and executable by the processor, wherein the manipulator is operable to receive an indication of a selected data aggregation from the content element list. Further, the manipulator is operable to execute a selected editing function on the respective group of at least one of the plurality of data items corresponding to the selected data aggregation.

In another aspect, a method of editing content on a wireless device comprises displaying content comprising a plurality of data items and a cursor having a position with respect to the content, and generating a content element list of at least one data aggregation based on applying at least one data aggregation rule to the content. In the content element list, each data aggregation comprises a group of at least one of the plurality of data items. Further, the at least one data aggregation rule determines an inclusion and an order of each data aggregation within the content element list based on the position of the cursor. The method also includes displaying the content element list, and receiving an indication of a selected data aggregation from the content element list. Additionally, the method includes executing a selected editing function on the respective group of at least one of the plurality of data items corresponding to the selected data aggregation. In a related aspect, a processor comprises one or more modules for performing the above-noted actions of the method. In a further related aspect, a computer program product comprises one or more instructions for causing a computer to perform the above-noted actions of the method.

In yet another aspect, an apparatus comprises means for displaying content comprising a plurality of data items and a cursor having a position with respect to the content. The apparatus also includes means for generating a content element list of at least one data aggregation based on applying at least one data aggregation rule to the content, wherein each data aggregation comprises a group of at least one of the plurality of data items, and wherein the at least one data aggregation rule determines an inclusion and an order of each data aggregation within the content element list based on the position of the cursor. Further, the apparatus includes means for displaying the content element list, and means for receiving an indication of a selected data aggregation from the content element list. Additionally, the apparatus includes means for executing a selected editing function on the respective group of at least one of the plurality of data items corresponding to the selected data aggregation.

### BRIEF DESCRIPTION OF THE DRAWINGS

The disclosed aspects will hereinafter be described in conjunction with the appended drawings, provided to illustrate and not to limit the disclosed aspects, wherein like designations denote like elements, and in which:
Fig. 1 is a schematic diagram of one aspect of a system for enhanced editing on a wireless communication device;
Fig. 2 is an example of one aspect of initiating an editing operation on data items of content on a display of the wireless device of Fig. 1;
Fig. 3 is an example of an aggregation rule used by the data aggregator of Fig. 1, according to one aspect;
Fig. 4 is an example of a content element list, and the corresponding groups of data items, associated with applying the aggregation rule of Fig. 3 to the content of Fig. 2, according to one aspect;
Fig. 5 is a diagram of one aspect of the components of the wireless communication device of Fig. 1;
Fig. 6 is a diagram of one aspect of the element recognizer of Figs. 1 and 5;
Fig. 7 is a diagram of one aspect of the manipulator of Figs. 1 and 5;
Figs. 8 and 9 are an example of one aspect of an operation of the system of Fig. 1;
Fig. 10 is a message flow diagram associated with one aspect of an operation of the system of Fig. 1; and
Fig. 11 is a flowchart of one aspect of a method for enhanced editing operable on a wireless communication device.

### DETAILED DESCRIPTION

The apparatus and methods described herein provide for enhanced editing on a wireless device so as to provide a smarter and easier method to cut, copy, and/or paste information on handheld devices, such as cellular phones. In particular, the apparatus and methods relate to editing data items presented as content on an output, such as a display, on the wireless device. According to one aspect, during an editing process, a list of at least one aggregation of data items is identified. For example, an aggregation rule, which may include a predetermined hierarchical structure, may be applied to the data items in order to generate a content element list of at least one aggregation of the data items. In one or more aspects, for example, the one or more aggregations of data items in the content element list may be based on a position of a cursor within the data items. In other aspects, or in combination with the prior aspect, the one or more aggregations of data items in the content element list may be based on a desired editing function. In any case, to continue with the editing process, a user may then select one of the aggregations from the content element list, rather than having to manually manipulate the device to identify the aggregation of interest, which is especially useful in wireless devices not having a mouse or other selection mechanism that can be easily manipulated to select data items. Thus, the described aspects provide a convenient way for a user of a wireless device to select at least one data item from the content being displayed, and to perform an editing function on the selected data item.

Alternatively, or in addition, the apparatus and methods provide for presenting the user with a list of editing functions, and then generating the list of one or more aggregations of data items based on the selected function. In some aspect, the list of functions is generated based on the content being displayed and/or on the application associated with the displayed content. In some aspects, for example, the selected function to execute on the data items is an editing function that involves moving the data items between applications on the communications device, or moving the data items within an application. Thus, the present apparatus and methods described herein provide for enhanced editing on a wireless device.

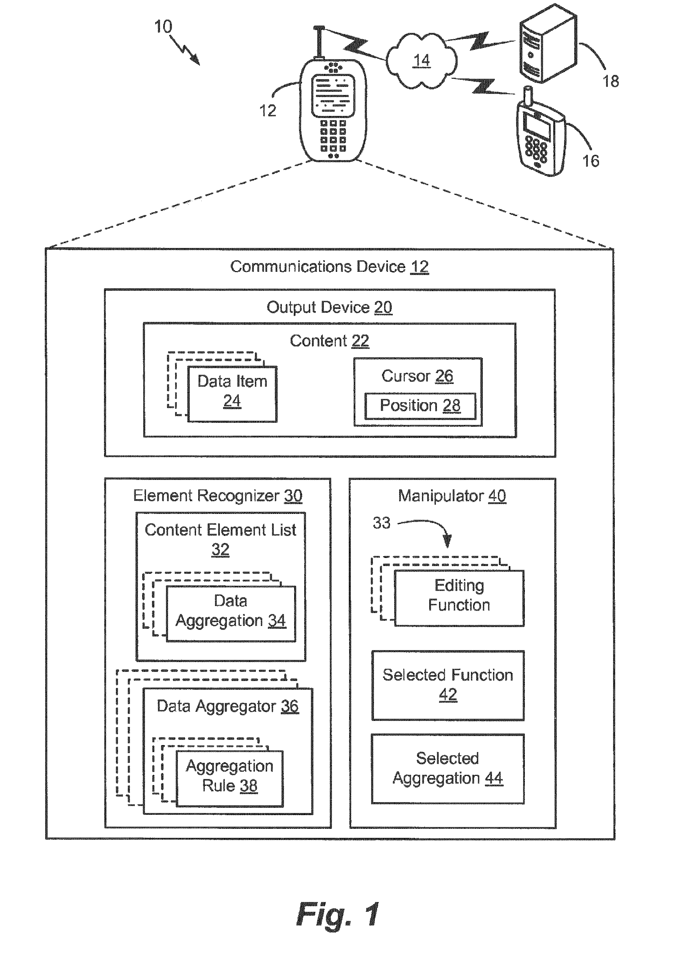

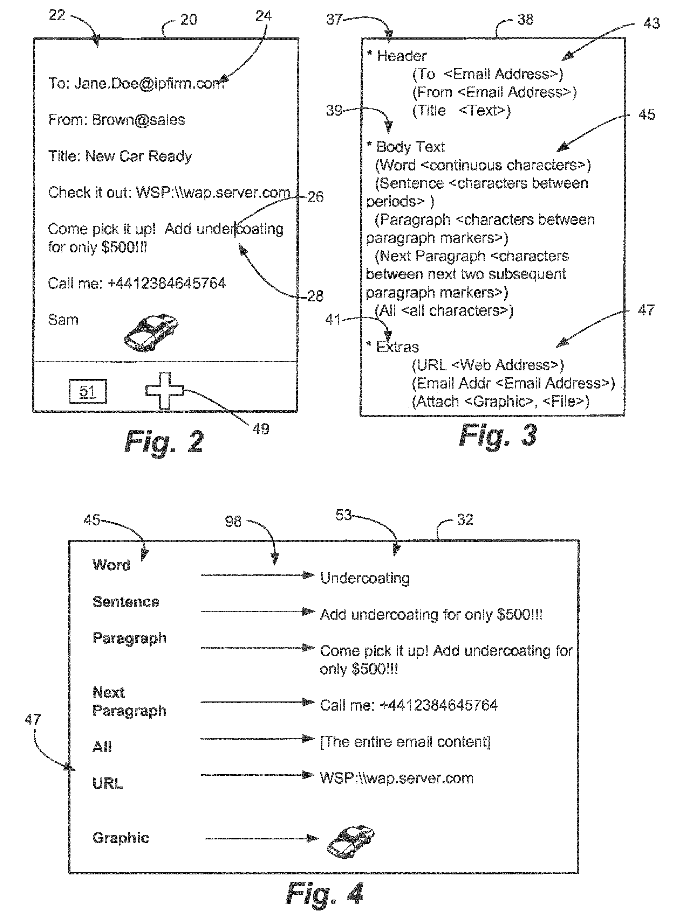

Referring to Figs. 1-4, in one aspect, an editing system 10 comprises a wireless communications device 12 operable to communicate with other communications devices 16 and 18 across a communications network 14. Communications device 12 comprises an output device 20 operable to present content 22 defined by at least one data item 24. Typically, however, content 22 includes a plurality of data items 24. As such, each data item 24 comprises at least a portion of the presented content 22. The output device 20 further comprises a cursor 26 having a position 28 relative to the presented content 22. For example, referring specifically to Fig. 2, the communications device 12 (Fig. 1) may be a cellular phone having output device 20 in the form of a liquid crystal display (LCD) presenting content 22, such as an email message, comprising at least one data item 24, such as the characters of the email message. The cursor 26 may be displayed in any form, such as in the form of a bar "|", and the position 28 is the location of the cursor 26 within the presented content 22, such as relative to one or more characters.

The communications device 12 further comprises an element recognizer 30 operable to generate a content element list 32 comprising at least one data aggregation 34 or group of predetermined ones of the at least one data item 24. In order to generate content element list 32, element recognizer 30 executes a data aggregator 36 that operates to define the at least one data aggregation 34 based on applying at least one predetermined aggregation rule 38 to the presented content 22. For example, predetermined aggregation rule 38 may include a rule that groups one or more data items 24 into one or more data aggregations 34. For instance, referring specifically to Fig. 3, in one non-limiting aspect, predetermined aggregation rule 38 may aggregate data items depending on their association with an area of the presented content, such as header data 37, body data 39, extra data 41, and/or may define one or more data items as being associated with one or more content elements 43, 45 and 47. For example, in the context of content 22 comprising an email, content elements 43, 45 and 47 may relate to one or more of: data items associated with a specific field, such as data associated with a "To" field, a "From" field, a "Carbon Copy" ("CC") field, a "Blind Carbon Copy" ("BCC") field, and/or a "Subject" field. For example, the data in these fields may include: email addresses or text; data items associated with an alphabetic and/or numeric character or group of characters, such as a letter, a word, a sentence, a paragraph, a next paragraph, a page, and/or all of a body portion of the email; and data items associated with a format-specific standard, such as a universal resource locator (URL), a web address, an email address, a phone number, an attachment, a file, a video, a graphic, etc. As such, the predetermined aggregation rule 38 may comprise a plurality of area components, such as header data 37, body data 39 and extra data 41, and/or a plurality of content elements 43, 45 and 47 usable by the element recognizer 30 in associating the data items 24 with one or more data aggregations 34.

Additionally, referring to Figs. 2-4, in some aspects, the content element list 32 may be generated as a function of the position 28 of the cursor 26 within the content 22. For example, a navigation key 49 (Fig. 2) may be used to locate cursor 26 (Fig. 2) at position 28 (Fig. 2), and an input from a physical and/or virtual function key 51 (Fig. 2) may be received, triggering the generation of content element list 32 (Fig. 4) having content elements, such as elements 45 (Fig. 4), corresponding to a plurality of data aggregations 53 (Fig. 4). For instance, the plurality of data aggregations 53 in this case are based on applying the predetermined aggregation rule 38 (Fig. 3) to the presented content 22 according to the position 28 of cursor 26. As such, in this instance, the plurality of data aggregations 53 correspond to the "Word" adjacent to cursor 26, the "Sentence" associated with cursor 26, the "Paragraph" associated with the cursor 26, the "Next Paragraph" if one exist, "All" of the body of the email, etc.

In this example, element recognizer 30 determines that the cursor 26 is in the "Body" portion of the email that comprises presented content 22. As such, element recognizer 30 associates the content elements 45 corresponding to "Word", "Sentence", "Paragraph", "Next Paragraph", "All", etc., as defined by predetermined aggregation rule 38, with the data items 24 of the "Body" portion of the email. Specifically, each of the content elements 45 have a label, e.g., "Word", "Sentence", "Paragraph", "Next Paragraph", "All", and each of the content elements 45 have a different aggregation rule associated with them, e.g. "<continuous characters>", "<all characters between periods>", "<all characters between carriage return indicators>", etc.

Further, in some aspects, the various data areas 37, 39, and 41 and/or content elements 43, 45 and 47 associated with aggregation rule 38 may be defined in an ordered manner. As such, execution of the aggregation rule 38 initiates processing at a level corresponding to the position 28 of cursor 26 and continues through the end of the respective order. For example, in this case, since position 28 of cursor 26 is within a "Word" in the content 22 corresponding to body data 39, the rules associated with the "Word" element are processed, followed by the rules for "Sentence", "Paragraph", etc., until the next ordered data area is reached, e.g. "Extras", upon which the corresponding rules are processed in their respective order, and so on.

In any case, the content element list 32 is presented, and the displayed data aggregations 34 provide a convenient mechanism for a user to select and manipulate the data items 24 that are associated with each of the aggregations 34.

Thus, element recognizer 30 is operable to evaluate the presented content 22 and execute data aggregator 36 to apply predetermined aggregation rule 38 to generate content element list 32 of at least one data aggregation 34, which may be based on position 28 of cursor 26 within presented content 22.

The communications device 12 further comprises a manipulator 40 that is operable to execute a selected function 42 on a selected data aggregation 44 identified from content element list 32. The selected function 42 may be chosen by the user of the device from among a plurality of editing functions 33. The plurality of editing functions 33 comprise operations to execute on the selected data aggregation 44, such as an editing function including, for example, one or more of a cut operation, a copy operation, a delete operation and a paste operation. For instance, manipulator 40 may allow selected data aggregation 44 to be manipulated within a given application and/or between different applications, such as respectively being moved from one portion to another portion of content 22 and/or being moved from content 22 generated by one application to some other content of another application.

Thus system 10 provides apparatus and methods for simplified editing on communications device 12 having limited editing mechanisms by generating a content element list 32 of at least one data aggregation 34, where each data aggregation 34 represents a grouping of one or more data items 24 being displayed on the output device 20.

Referring to Fig. 1, communications network 14 may comprise any data, voice, and/or media communications network. For example, communications network 14 may comprise all or some portion of any one or any combination of: a wired or wireless telephone network; a terrestrial telephone network; a satellite telephone network; an infrared network such as an Infrared Data Association (IrDA)-based network; a short-range wireless network; a Bluetooth^{®} technology network; a ZigBee^{®} protocol network; an ultra wide band (UWB) protocol network; a home radio frequency (HomeRF) network; a shared wireless access protocol (SWAP) network; a wideband network, such as a wireless Ethernet compatibility alliance (WECA) network, a wireless fidelity alliance (Wi-Fi Alliance) network, and a 802.xx network; a packet data network; a data network; an Internet Protocol Multimedia Subsystem (IMS) network; a public switched telephone network; a public heterogeneous communications network, such as the Internet; a private communications network; a multicast network such as a Forward Link Only (FLO) network, including the MediaFLO^{™} System available from Qualcomm, Inc. of San Diego, California; a digital video broadcasting (DVB) network, such as DVB-S for satellite, DVB-C for cable, DVB-T for terrestrial television, DVB-H for terrestrial television for handhelds; and a land mobile radio network.

Further, examples of telephone networks that may be included in some aspects of communications network 14 include at least a portion of one, or any combination, of analog and digital networks/technologies, such as: code division multiple access (CDMA), wideband code division multiple access (WCDMA), universal mobile telecommunications system (UMTS), advanced mobile phone service (AMPS), time division multiple access (TDMA), frequency division multiple access (FDMA), orthogonal frequency division multiple access (OFDMA), global system for mobile communications (GSM), single carrier (IX) radio transmission technology (RTT), evolution data only (EV-DO) technology, general packet radio service (GPRS), enhanced data GSM environment (EDGE), high speed downlink data packet access (HSPDA), analog and digital satellite systems, and any other technologies/protocols that may be used in at least one of a wireless communications network or a data communications network.

According to some aspects, communications device 12 may be operable to communicate across network 14 with corresponding wireless communication device 16, and/or with a fixed communication device 18. For example, as illustrated in Fig. 1, communications devices 12 and 16 each may comprise a mobile communication device, such as a wireless and/or cellular telephone, while communication device 18 may comprise a fixed communication device, such as a network device, a server, a computer workstation, etc. It should be understood that communication devices 12, 16, and/or 18 are not limited to the illustrated devices, but may further include any type of computerized, communication device such as a Personal Digital Assistant (PDA), a two-way text pager, a portable computer having a wired or wireless communication portal, and any type of computer platform having a wired and/or wireless communications portal. Further, communication device 16 and/or 18 can be a remote-slave or other similar device, such as remote sensors, remote servers, diagnostic tools, data relays, and the like, which does not have an end-user thereof, but which simply communicates data across a wireless or wired network. In alternate aspects, communication devices 12, 16, and/or 18 may be wired communication devices, such as a landline telephone, personal computer, set-top box, or the like. Additionally, it should be noted that any combination of any number of communication devices 12, 16, and/or 18 may be utilized in system 10. Therefore, the present apparatus and methods can accordingly be performed on any form of wired or wireless device or computer module, including a wired or wireless communication portal, including without limitation, wireless modems, PCMCIA cards, access terminals, personal computers, telephones, or any combination or sub-combination thereof.

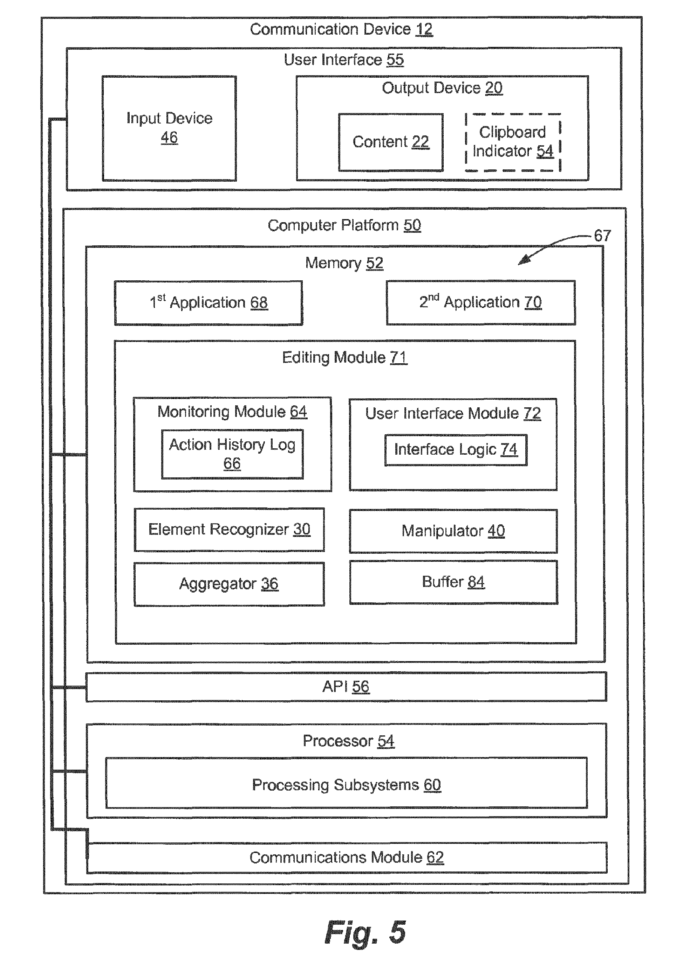

Additionally, referring to Fig. 5, communications device 12 (referred to for simplicity, but Fig. 5 may also represent any of devices 16 and/or 18) may include a user interface 55 having an input device 46 operable to generate or receive an input into the device, and an output device 20 operable to generate and/or present information for consumption by the user of the device. For example, input device 46 may include at least one mechanism such as a keypad and/or keyboard, navigation key 49 (Fig. 2), a physical and/or virtual function key such as key 51 (Fig. 2), a mouse, a touch-screen display, a microphone in association with a voice recognition module, etc. In certain aspects, input device 46 may provide for user input of selections of selected function 42 (Fig. 1) and/or selected aggregation 44 (Fig. 1). Further, for example, output device 20 may include a display, an audio speaker, a haptic feedback mechanism, etc. Output device 20 may generate a graphical user interface, a sound, a feeling such as a vibration, etc., and other such outputs as may be associated, for example, with the transmission and/or receipt of the content element list 32 comprising data aggregations 34. Additionally, output device 20 may include a clipboard indicator 54 that indicates to the user when there are data items 24, such as the selected aggregation 44 (Fig. 1), available in memory 52 for use by an application 68 and/or 70.

Further, communications device 12 may include a computer platform 50 operable to execute applications to provide functionality to the device, and which may further interact with input device 46 and output device 20. Computer platform 50 may include memory 52, which may comprise volatile and nonvolatile memory portions, such as read-only and/or random-access memory (RAM and ROM), erasable programmable read-only memory (EPROM), electrically erasable programmable read-only memory (EEPROM), flash memory, and/or any memory common to computer platforms. Further, memory 52 may include active memory and storage memory, including an electronic file system and any secondary and/or tertiary storage device, such as magnetic media, optical media, tape, soft and/or hard disk, and removable memory components. Further, a buffer 84 may be stored in memory 52 or may be stored across the communications network 14 in a device such as a network device, a server, a computer workstation. The communications device 12 is operable to store and retrieve data items 24 to and from the buffer 84.

Further, computer platform 50 may also include a processor 54, which may be an application-specific integrated circuit (ASIC), or other chipset, processor, logic circuit, or other data processing device. In some aspects, such as when communications device 12 comprises a cellular telephone, processor 54 or an ASIC may execute an application programming interface (API) layer 56 that interfaces with any resident software components, such as voice call module, a data call module, a media-related module, element recognizer 30, aggregator 36 and manipulator 40 stored in memory 52. API 56 may be a runtime environment executing on the respective wireless device. One such runtime environment is Binary Runtime Environment for Wireless^{®} (BREW^{®}) software developed by Qualcomm, Inc., of San Diego, California. Other runtime environments may be utilized that, for example, operate to control the execution of applications on wireless computing devices.

Additionally, processor 54 may include various processing subsystems 60 embodied in hardware, firmware, software, and combinations thereof, that enable the functionality of communications device 12 and the operability of the communications device 12 on communications network 14 (Fig. 1). For example, processing subsystems 60 allow for initiating and maintaining communications, and exchanging data, with other networked devices as well as within and/or among components of communications device 12. In one aspect, such as in a cellular telephone, processor 54 may include one or a combination of processing subsystems 60, including but not limited to subsystems such as: sound, non-volatile memory, file system, transmit, receive, searcher, layer 1, layer 2, layer 3, main control, remote procedure, handset, power management, diagnostic, digital signal processor, vocoder, messaging, call manager, Bluetooth^{®} system, Bluetooth^{®} LPOS (location position), position determination, position engine, user interface, sleep, data services, security, authentication, USIM/SIM (universal subscriber identity module/subscriber identity module), voice services, graphics, USB (universal serial bus), multimedia such as MPEG (Moving Picture Experts Group) protocol multimedia, GPRS (General Packet Radio Service), short message service (SMS), short voice service (SVS™), web browser, multimedia service (MMS), enhanced messaging service (EMS), wireless access protocol (WAP) push, email, etc. For the disclosed aspects, processing subsystems 60 of processor 54 may include any subsystem components that interact with applications executing on computer platform 50.

Computer platform 50 may further include a communications module 62 which enables communications among the various components of communications device 12, as well as being operable to exchange communications messages between the communications device 12 and communications network 14 and other communication devices 16 and/or 18 (Fig. 1). Communications module 62 may be embodied in hardware, firmware, software, and/or combinations thereof, and may further include all protocols for use in intra-device and inter-device communications. Further, communications module 62 is operable to transmit and/or receive information in accordance with the apparatus and methods described herein.

Additionally, a plurality of applications 67, such as first application 68 and/or second application 70, may be stored in memory 52 and may be operable to provide additional functionality to the communications device 12. For example, the plurality of applications 67 may include, but are not limited to, one or more of any combination of applications such as: a user interface application; a communications-related application, such as a voice call application, a short voice service application, a data call application such as a web browser, e-mail, a short message service (SMS) or text messaging application, a group communication or push-to-talk application; an instant messaging application; a location/position application, including one or any combination of a satellite-based and network-based system such as a Global Positioning System (GPS) application, an assisted GPS (A-GPS) system such as the gpsOne® solution from Qualcomm Incorporated of San Diego, California, and a mobile assisted or hybrid mobile-assisted A-GPS application; a media- related application such as a photograph application, a video application such as a video player and/or a multicast, broadcast, and/or unicast application, including the MediaFLO™ solution available from Qualcomm Incorporated of San Diego, California; information serving applications; content serving applications; personal information management applications such as a contact list, a calendar, an appointment list, a task list application; a gaming application; an emergency service-related application, such as an E911 application; applets; and any other application operable on a wireless device and/or a network device.

Additionally, in some aspects, memory 52 includes an editing module 71 operable to enable editing of presented content 22 within an application or between applications, such as first and/or second applications 68 and/or 70. Editing module 71 includes the element recognizer 30, data aggregator 36, and manipulator 40. Further, in some optional aspects, editing module 71 may further include a monitoring module 64 and/or a user interface module 72. These components are described below in more detail.

The monitoring module 64 may be stored in and executed from memory 52. Monitoring module 64 is operable to store actions of the communications device 12, for example, in an action history log 66. Monitoring module 64 may comprise one or any combination of hardware, software, firmware, data, and executable instructions operable to provide the communications device 12 with the ability to store the actions of the communications device 12 in the action history log 66. The actions that can be stored comprise one or more state values and/or status data associated with any component on communications device 12, such as those values associated with executing applications 68 and/or 70. Further, the actions may further include data representative of received inputs from a user, such as selected aggregation 44 and selected function 42. Additionally, the action history log 66 may store communication event data, such as data packets associated with the respective communication protocol used by the respective communication device. As such, action history log 66 is operable to store any action occurring on communications device 12. The action history log 66 may be stored on the communications device 12 in memory 52, or the action history log 66 may be stored on a removable storage device or on a computing device across the network 14. Thus the monitor module 64 provides the communications device 12 with the ability to store information relating to a history of the actions occurring on the communications device 12.

Further, the user interface module 72 is operable to allow the device user to interface with element recognizer 30, aggregator 36, manipulator 40, and any other component of the editing module 71. User interface module 72 may comprise one or any combination of hardware, software, firmware, data, and executable instructions operable to execute these functions. For example, in some aspects, user interface module 72 may comprise interface logic 74 operable to interface between output device 20 and element recognizer 30 and manipulator 40, and/or any of the plurality of software components including applications 68 and 70, in order to present outputs, such as a graphical menu, a sound, the content element list 32 of data aggregations 34 comprising one or more sets of data items 24, etc., to the user of the device, and in order to prompt the user to enter inputs on the input device 46, such as selecting one of the data aggregations 34 from the content element list 32, choosing a selected function 42, etc.

Additionally, referring to Figs. 1, 5 and 6, element recognizer 30 may be stored in and executed from memory 52. Element recognizer 30 may comprise one or any combination of hardware, software, firmware, data and executable instructions operable to provide the communications device 12 with the ability to generate the content element list 32 of aggregations 34 according to one or more aggregation rules 38, based on at least the content 22 and in some aspects based on the position 28 of the cursor 26 within the content 22.

In some aspects, such as when more than one aggregation rule 38 is present, element recognizer 30 may also include rule selection logic 76 to determine which aggregation rule 38 to apply to the presented content 22, for example, based on a rule identifier 83 (discussed below). In other aspects, rule selection logic 76 may query an application 68 and/or 70 associated with the content 22, or reference a user preference 85 stored in association with element recognizer, to obtain the predetermined data aggregation rule 38 or a reference thereto. For example, user preference 85 may be one or more settings defined by a user of the respective device, wherein the settings define how the user prefers to have data aggregated.

Data aggregator 36 may comprise any hardware, software, firmware, executable instructions, data, and combinations thereof, which may be stored in memory 52 and operable to perform the data grouping functions described herein. Further, data aggregator 36 may execute the one or more predetermined aggregation rules 38 that each define one or more data elements 79, such as area elements 37, 39 and 41 and/or content elements 43, 45 and 47 (Fig. 3), into which presented content 22 may be grouped. For example, each content element 79 may include a label 80, such as "Word," that identifies the respective content element and one or more corresponding element aggregation rules 82 that determine which data items 24 from the content 22 to associate with the respective label 80. The element aggregation rule 82 may be executable instructions, or the element aggregation rule 82 may refer to rules that the data aggregator 36 may use.

Further, in some aspects, each predetermined aggregation rule 38 may have a rule identifier (ID) 83 to uniquely identify the respective rule. For example, rule identification may be desired as each aggregation rule 38 can be specific to a type of content, an application operable to generate the content, a given wireless device and/or device user, a given wireless carrier and/or operator associated with a wireless device, a given wireless network, and/or any other component of and/or party to system 10 (Fig. 1).

Further, in some optional aspects, data aggregator 36 may execute prediction logic 87 to analyze the action history log 66 (Fig. 5) and make aggregation predictions 89 for inclusion in content element list 32. For example, the communications device 12 may have cut and pasted an entire paragraph of text from email to an instant messaging application in response to user commands the last three times the email application was executed. Based on the storage of these actions in action history log 66, the data aggregator 36 may use the prediction logic 87 to make the aggregation prediction 89 that the user may again want to select a paragraph in the email, so the generated content element list 32 may comprise "Paragraph" and its corresponding data items 24 as its first-listed one of the data aggregations 34.

Additionally, referring to Figs. 1, 5, and 7, manipulator 40 may be stored in and executed from memory 52. Manipulator 40 may comprise one or any combination of hardware, software, firmware, data, and executable instructions operable to provide the communications device 12 with the ability to execute editing functions on the data items 24 of presented content 22. For example, the manipulator 40 is operable to execute the selected function 42, such as a cut, a copy, and/or a paste, on the selected aggregation 44 using the buffer 84, thereby effecting the editing function either within the given content 22 and/or application corresponding to the content 22, or between two applications.

In other aspects, the manipulator 40 is operable to execute the selected function 42 on the selected aggregation 44 across the communication network 14. For example, an application may be executing on a remote communication device 18 and the manipulator 40 may move the data items 24 associated with the selected aggregation 44 from the communication device 18 to the buffer 84.

The manipulator 40 may be operable to generate one or more function lists 86 comprising one or more editing functions 33. The functions 33 arc editing operations, such as a cut, a copy, and a paste, that manipulate data items 24. The function list 86 may be generated based on the content 22, the action history log 66, and/or the application 68 or 70 associated with the content 22. Thus, manipulator 40 provides for generating a function list 86, and for executing the selected editing function 42 on the selected aggregation 44.

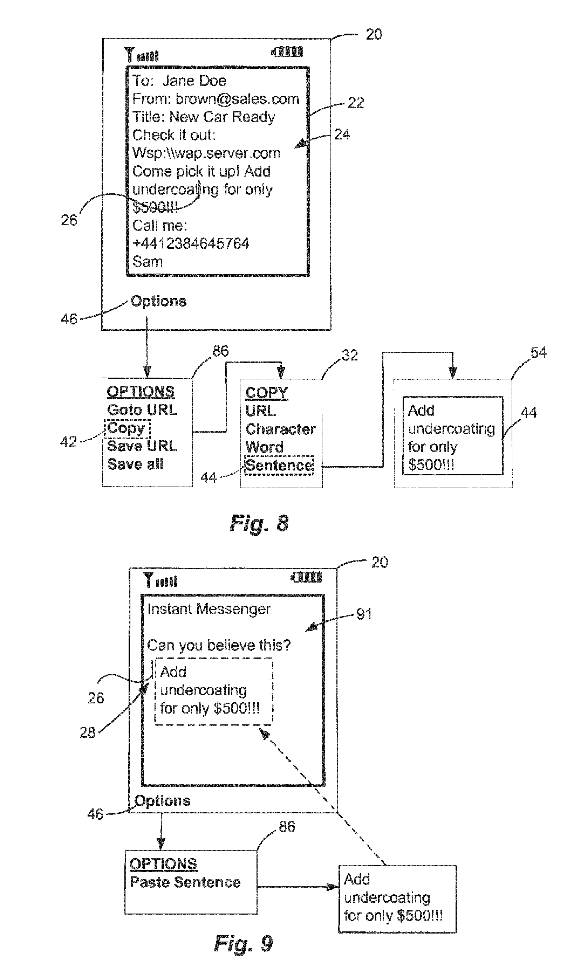

Referring to Figs. 8-10, one aspect of the editing system 10 in operation includes multiple windows being generated on the communications device 12 (Fig. 1) in order to manipulate selected content based on the exchange of multiple messages and/or events with the editing module 71. In this example, communications device 12 includes output device 20 having displayed content 22 manipulated via input device 46 based on position 28 of cursor 26.

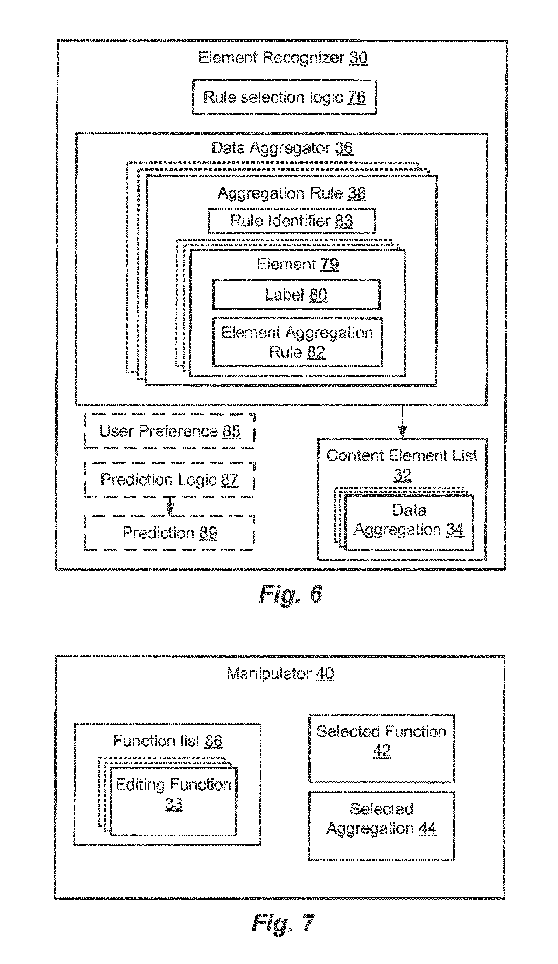

The process begins when user interface 55 receives an input at an input device 46, such as an indication that a user has selected the "Options" key, and forwards the received input to the editing module 71 (Events 200 and 201). It should be noted that although the input receiving mechanism is illustrated in the form of an "Options" key, the key may have other titles or names, such as a "More" key, an "Actions" key, and any other name that would be understood by a user to include additional actions. In response, the process includes generating a function list and forwarding it for display by the user interface module (Events 202 and 203). For example, the manipulator 40 generates function list 86, which may be based on the respective application displaying the content 22 and/or based on a respective aggregation rule 38, and further based on the position 28 of the cursor 26. For example, in this case, function list 86 may contain "Options" that are based on content elements 79 (Fig. 6) corresponding to the displayed plurality of data items 24 according to the respective aggregation rule 38 (Fig. 6). It should be noted that other content having different data items can result in function list 86 having a different set of available functions. Additionally, the process includes presenting the function list on the display (Event 204). For example, the user interface 55 presents the function list 86 to the user via a window within the display 20. It should be noted that in Fig. 8, for convenience, the function list 86 is depicted below the display 20; however, typically, the function list 86 is presented as a window on the display 20.

The process continues with the device receiving the input corresponding to selected function and forwarding of the selected input to the editing module (Events 205 and 206). For example, the selected function 42 may be the "Copy" function. In response, the element recognizer 30 applies the predetermined data aggregation rule 38 (not illustrated) to generate the content element list 32 of corresponding data aggregations 34 (Event 207). In this case, the content element list 32 comprises the labels 80 (Fig. 6) corresponding to each respective element 79 (Fig. 6) of the respective aggregation rule 38 (Fig. 6) corresponding to the respective group of one or more data items present in the displayed content 22 and associated with the respective rule. As such, content element list 32 will vary depending on the data items present in the respective content 22 being displayed. Further, in this case, content element list 32 is based on the position 28 of cursor 26. For example, the element recognizer 30 associates each of the data items 24 of "undercoating" to the content element 45 "Word." The element recognizer 30 continues associating other content elements 45 in order to generate the content element list 32 having labels 80 corresponding to "Sentence," "Paragraph," etc. Further, the element recognizer 30 forwards the content clement list 32 to the user interface module 72, which executes to present the content element list 32 to the user via user interface 55 (Events 208 and 209).

The process further includes receiving an indication of a selected aggregation from the aggregations in the list and forwarding the selection to the editing module 71 (Events 210 and 211). In this case, for example, the user selects the data aggregation 44 of "Sentence" from the presented content element list 32. Further, the process includes executing the selected function on the selected aggregation (Event 212). In this case, the manipulator 40 executes the selected function 42 of "Copy" on the selected aggregation 44 of "Sentence," which operates to copy the sentence "Add undercoating for only $500!!!" to the buffer 84 (Fig. 5). The completion of the selected function 42, of the "Copy" in this case, may be communicated to the user by the user interface 55 presenting a confirmation on the output device 20, e.g. a message such as "Copied" (not illustrated), or by presenting clipboard indicator 54, such as a symbol or a window with the respective data items, on display 20 to notify the user of the presence of the selected aggregation data 44 in buffer 84 (Fig. 5) (Event 213).

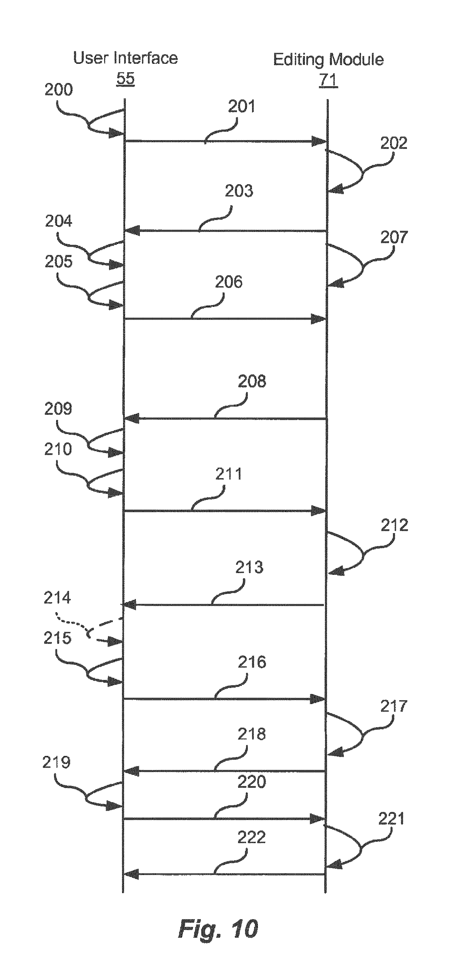

In one example, referring specifically to Fig. 9 and a portion of Fig. 10, the process continues when the user decides to execute another application (Optional Event 214). It should be noted that the user could instantiate any other application or service on the wireless device and use the selected aggregation data 44. Further, it should be noted that the user could use the selected aggregation data 44 within the same application, such as in a new message created in the email messaging application described in this case, or such as copying data from one portion of an email message being composed to another portion of the same message. Going forward with this example, the user interface 55 receives from the user an indication to switch to another application, such as an instant messaging application, which could be, for example, one of first or second applications 68 or 70. The communications device 12 executes the instant messaging application and presents to the user a view 91 on the display 20 and "Option" key as an input device 46. For example, the view 91 allows for user input, such as the user keying in a message.

Additionally, the process further includes performing another editing function on the selected and stored aggregation of data items (Event 215-221). In one example, when the user selects the "Options" key on the input device 46, which is received by the editing module 71, the editing module 71 generates and presents a function list 86 of at least one of a plurality of editing functions 33, such as "Paste" operation (Events 215-218). When a user input representing a selection of "Paste" is received (Event 219), the manipulator 40 receives this input and executes the selected function 42 on the selected aggregation 44 (Events 220 and 221). In this case, the manipulator 40 executes the "Paste" operation on the sentence "Add undercoating for only $500!!!" by transferring the respective contents of buffer 84 to the position 28 of the cursor 26 in view 91. Further, after performing the function, the editing module 71 initiates refreshing of the view 91 to include the results of executing the selected function on the selected aggregation (Event 222). Thus, the apparatus and methods described herein allow for enhanced editing of data items on a wireless device having limited user-manipulated data item selection tools.

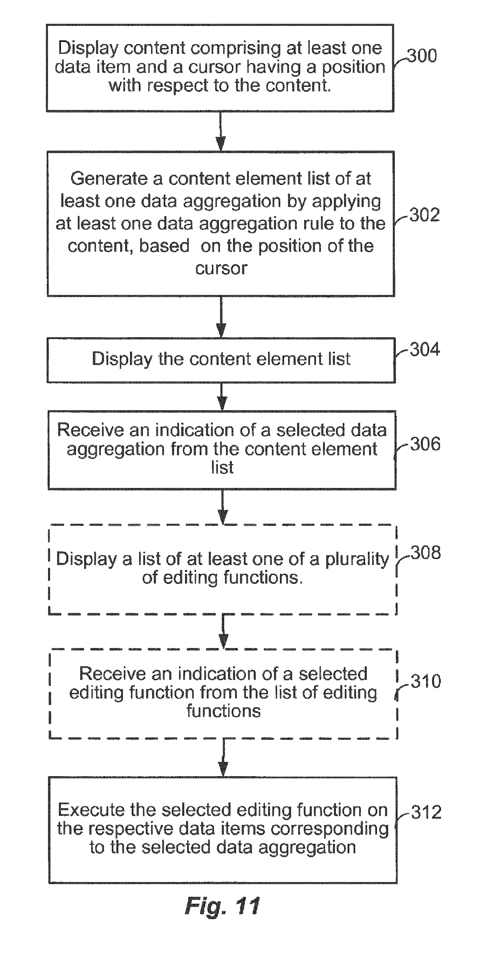

Referring to Fig. 11, in operation, one non-limiting case of a method for enhanced editing on a communications device comprises displaying content comprising at least one data item, and further displaying a cursor having a position with respect to the content (Block 300). For example, an email application may display the contents of the email where each of the characters are data items, and including a movable cursor within the characters.

The method may further include generating a content element list by applying at least one aggregation rule to the content, wherein the at least one data aggregation may be based on the position of the cursor (Block 302). For example, the cursor may be inside a word within a displayed email message, and the content element list may comprise a first aggregation of the word, a second aggregation of the sentence in which the word is contained, a third aggregation of the paragraph within which the sentence is contained, as so on.

The method may further include displaying the content element list (Block 304). For example, a list of data aggregations may be presented in a pop-up window on a display of the device. The method may further include receiving a selection of one of the data aggregations from the list (Block 306). For example, the user can select a desired one of the automatically grouped sets of the data items upon, for instance, on which to perform a desired editing function.

Optionally, the method may further include displaying a list of at least one of a plurality of editing functions (Block 308). For example, a function may be cut, copy, or paste. Further, this action may occur prior to the generation and display of the content element list, and/or this action may occur (again) after receiving the selection of a desired aggregation. Optionally, the method may further include receiving a selection of one of the plurality of editing functions from the list of functions (Block 310). For example, in one case, the user may select a cut function, a copy function, or a paste function.

Additionally, the method includes executing a selected editing function on the selected data aggregation (Block 312). For example, the cut, copy, or paste function may be performed on the selected data aggregation, which may copy or transfer the selected data aggregation to another place in memory. In some aspects, there may be only one available function to perform, and as such, there would be no need to provide a list of available editing functions from which to choose.

Thus, the above-noted method provides an efficient way for identifying content elements within displayed content on which to perform editing functions, as well as the available editing functions to perform on the respective content elements.

The various illustrative logics, logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

Further, the steps and/or actions of a method or algorithm described in connection with the aspects disclosed herein may be embodied directly in hardware, in a software module executed by a processor, or in a combination of the two. A software module may reside in RAM memory, flash memory, ROM memory, EPROM memory, EEPROM memory, registers, a hard disk, a removable disk, a CD-ROM, or any other form of storage medium known in the art. An exemplary storage medium may be coupled to the processor, such that the processor can read information from, and write information to, the storage medium. In the alternative, the storage medium may be integral to the processor. Further, in some aspects, the processor and the storage medium may reside in an ASIC. Additionally, the ASIC may reside in a user terminal. In the alternative, the processor and the storage medium may reside as discrete components in a user terminal. Additionally, in some aspects, the steps and/or actions of a method or algorithm may reside as one or any combination or set of code or instructions on a machine readable medium and/or computer readable medium, which may be define a computer program product. Further, the steps and/or actions of a method or algorithm may reside as one or any combination or set of modules of at least one processor.

While the foregoing disclosure shows illustrative aspects, it should be noted that various changes and modifications could be made herein without departing from the scope of the described aspects as defined by the appended claims. Furthermore, although elements of the described aspects may be described or claimed in the singular, the plural is contemplated unless limitation to the singular is explicitly stated.

### OTHER ASPECTS

1. A wireless device, comprising:
   a memory;
   a processor in communication with the memory;
   an output device in communication with the processor and the memory, wherein the output device comprises a display operable to present content comprising a plurality of data items and a cursor having a position within the content;
   an element recognizer stored in the memory and executable by the processor, wherein the element recognizer comprises at least one data aggregation rule that defines aggregations of data items, wherein the element recognizer is executable to generate a content element list of at least one data aggregation when the at least one data aggregation rule is applied to the content, wherein each data aggregation comprises a group of at least one of the plurality of data items, and wherein the at least one data aggregation rule determines an inclusion and an order of each data aggregation within the content element list based on the position of the cursor, wherein the element recognizer is further operable to initiate presentation of the content element list on the display; and
   a manipulator stored in the memory and executable by the processor, wherein the manipulator is operable to receive an indication of a selected data aggregation from the content element list, and wherein the manipulator is further operable to execute a selected editing function on the respective group of at least one of the plurality of data items corresponding to the selected data aggregation.
2. The wireless device of clause 1, wherein the element recognizer is further operable to generate the content element list based on the selected editing function.
3. The wireless device of clause 1, wherein the selected editing function comprises at least one of a group of a cut operation, a copy operation, or a paste operation.
4. The wireless device of clause 1, wherein the at least one data aggregation rule defines a first group of the plurality of data items corresponding to a word, a second group of the plurality of data items corresponding to a sentence, and a third group of the plurality of data items corresponding to a paragraph.
5. The wireless device of clause 1, wherein the at least one data aggregation rule defines different ones of the aggregations of data items based on an area of the content where the respective data items are located.
6. The wireless device of clause 1, further comprising at least one application stored in the memory and executable by the processor to generate the content, wherein the at least one data aggregation rule comprises a plurality of data aggregation rules each corresponding to one of a plurality of applications, wherein the element recognizer is operable to execute a selected one of the plurality of data aggregation rules based on the application that generates the content.
7. The wireless device of clause 1, further comprising an application stored in the memory and executable by the processor to generate the content, wherein the manipulator further comprises a plurality of editing functions each corresponding to one of a plurality of applications, wherein the manipulator is operable to generate a list of editing functions based on the application that generates the content.
8. The wireless device of clause 1, wherein the at least one data aggregation rule further comprises a plurality of element aggregation rules each defining one of a plurality of content elements that each comprise different aggregations of data items, wherein the manipulator further comprises a plurality of editing functions each corresponding to at least one of the plurality of content elements, wherein the manipulator is further operable to generate a list of editing functions based on the respective one or more of the plurality of content elements present in the content on the display according to the at least one data aggregation rule.
9. The wireless device of clause 8, wherein the manipulator is further operable to generate the list of editing functions based on the position of the cursor.
10. The wireless device of clause 1, wherein the manipulator is further operable to generate a list of at least one editing function based on the selected data aggregation.
11. The wireless device of clause 1, wherein the manipulator is further operable to generate a list of at least one editing function based on an application that generated the content.
12. The wireless device of clause 1, further comprising a monitoring module operable to store at least one editing action occurring on the communications device in an action history log, and wherein the manipulator is further operable to generate a list of editing functions based on the at least one editing action stored in the action history log.
13. The wireless device of clause 12, wherein the at least one editing action of the communications device comprises at least one of a group of an execution of an application, or an execution of a selected editing function, and wherein the manipulator is further operable to order each editing function in the list of editing functions based on the action history log.
14. The wireless device of clause 1, wherein each of the plurality of data items comprises at least one of a group of a character, a number, a universal resource locator, an email address, a phone number, an audio file, a video file, or a graphics file.
15. The wireless device of clause 1, further comprising a first application and a second application both stored in memory and both executable by the processor, wherein the respective group of at least one of the plurality of data items corresponding to the selected data aggregation further corresponds to the first application, and wherein execution of the selected editing function results in the respective group of at least one of the plurality of data items corresponding to the selected data aggregation becoming associated with the second application.
16. The wireless device of clause 1, further comprising an application stored in the memory and executable by the processor to generate the content, and wherein the manipulator is further operable to move the respective group of at least one of the plurality of data items associated with the selected data aggregation within different portions of the application.
17. The wireless device of clause 1, further comprising a key operable to control the position of the cursor, wherein the cursor is operable to change position only based on actuation of the key.
18. A method of editing content on a wireless device, comprising:
   displaying content comprising a plurality of data items and a cursor having a position with respect to the content;
   generating a content element list of at least one data aggregation based on applying at least one data aggregation rule to the content, wherein each data aggregation comprises a group of at least one of the plurality of data items, and wherein the at least one data aggregation rule determines an inclusion and an order of each data aggregation within the content element list based on the position of the cursor;
   displaying the content element list;
   receiving an indication of a selected data aggregation from the content element list; and
   executing a selected editing function on the respective group of at least one of the plurality of data items corresponding to the selected data aggregation.
19. The method of clause 18, wherein generating further comprises generating based on the selected editing function.
20. The method of clause 18, further comprising generating a list of at least one of a plurality of editing functions based on the position of the cursor, displaying the list of at least one of a plurality of editing functions, and receiving a selection of one of the list, wherein executing the selected editing function is based on the received selection.
21. The method of clause 20, wherein executing the selected editing function comprises at least one of a group of copying the respective data items represented by the selected data aggregation to storage, cutting the respective data items represented by the selected data aggregation, or pasting the respective data items represented by the selected aggregation from storage to an application.
22. The method of clause 18, wherein applying the at least one data aggregation rule further comprises defining a first group of the plurality of data items corresponding to a word, defining a second group of the plurality of data items corresponding to a sentence, and defining a third group of the plurality of data items corresponding to a paragraph.
23. The method of clause 18, wherein applying the at least one data aggregation rule further comprises defining different ones of the aggregations of data items based on an area of the content where the respective data items are located.
24. The method of clause 18, further comprising executing at least one application to generate the content, wherein applying the at least one data aggregation rule further comprises applying a selected one of a plurality of data aggregation rules each corresponding to one of a plurality of applications, wherein the selected one of the plurality of data aggregation rules is based on the application that generates the content.
25. The method of clause 18, further comprising executing at least one application to generate the content, further comprising generating a list of a plurality of editing functions each corresponding to one of a plurality of applications, wherein the generated list of editing functions is based on the application that generates the content.
26. The method of clause 18, wherein applying the at least one data aggregation rule further comprises applying a plurality of element aggregation rules each defining one of a plurality of content elements that each comprise different aggregations of data items, further comprising generating a list of a plurality of editing functions each corresponding to at least one of the plurality of content elements, wherein the generated list of editing functions is based on the respective one or more of the plurality of content elements present in the content on the display according to the applying of the plurality of element aggregation rules, and receiving a selection of the selected editing function from the generated list.
27. The method of clause 26, further comprising generating the list of editing functions based on the position of the cursor.
28. The method of clause 18, further comprising generating a list of at least one editing function based on the selected data aggregation.
29. The method of clause 18, further comprising generating a list of at least one editing function based on an application that generated the content.
30. The method of clause 18, further comprising storing at least one editing action in an action history log, and generating a list of editing functions based on the at least one editing action stored in the action history log.
31. The method of clause 30, wherein storing at least one editing action of the communications device further comprises storing at least one of an execution of an application or an execution of the selected editing function, and further comprising ordering each editing function in the list of editing functions based on the action history log.
32. The method of clause 18, wherein displaying content further comprises displaying at least one of a group of a character, a number, a universal resource locator, an email address, a phone number, an audio file, a video file, or a graphics file.
33. The method of clause 18, wherein displaying content is based on the execution of a first application, and wherein executing the selected editing function results in the respective group of at least one of the plurality of data items corresponding to the selected data aggregation becoming associated with a second application.
34. The method of clause 18, wherein displaying content is based on the execution of an application, and wherein executing the selected editing function further comprises moving the respective group of at least one of the plurality of data items associated with the selected data aggregation within different portions of the application.
35. The method of clause 18, further comprising controlling the position of the cursor only based on actuation of a key that moves the cursor.
36. At least one processor configured to enable editing on a wireless device, comprising:
   a first module for displaying content comprising a plurality of data items and a cursor having a position with respect to the content;
   a second module for generating a content element list of at least one data aggregation based on applying at least one data aggregation rule to the content, wherein each data aggregation comprises a group of at least one of the plurality of data items, and wherein the at least one data aggregation rule determines an inclusion and an order of each data aggregation within the content element list based on the position of the cursor;
   a third module for displaying the content element list;
   a fourth module for receiving an indication of a selected data aggregation from the content element list; and a fifth module for executing a selected editing function on the respective group of at least one of the plurality of data items corresponding to the selected data aggregation.
37. A computer program product, comprising:
   a computer-readable medium comprising: at least one instruction for causing a computer to display content comprising a plurality of data items and a cursor having a position with respect to the content;
   at least one instruction for causing the computer to generate a content element list of at least one data aggregation based on applying at least one data aggregation rule to the content, wherein each data aggregation comprises a group of at least one of the plurality of data items, and wherein the at least one data aggregation rule determines an inclusion and an order of each data aggregation within the content element list based on the position of the cursor;
   at least one instruction for causing the computer to display the content element list;
   at least one instruction for causing the computer to receive an indication of a selected data aggregation from the content element list; and
   at least one instruction for causing to execute a selected editing function on the respective group of at least one of the plurality of data items corresponding to the selected data aggregation.
38. An apparatus, comprising:
   means for displaying content comprising a plurality of data items and a cursor having a position with respect to the content;
   means for generating a content element list of at least one data aggregation based on applying at least one data aggregation rule to the content, wherein each data aggregation comprises a group of at least one of the plurality of data items, and wherein the at least one data aggregation rule determines an inclusion and an order of each data aggregation within the content element list based on the position of the cursor;
   means for displaying the content element list; means for receiving an indication of a selected data aggregation from the content element list; and
   means for executing a selected editing function on the respective group of at least one of the plurality of data items corresponding to the selected data aggregation.

## Claims

1. A method of editing content on a wireless device (12), comprising:
displaying content (22) comprising a plurality of data items (24) and a cursor (26) having a position (28) with respect to the content (22);
generating one or more data aggregations (34) based on applying at least one data aggregation rule (38) to the content (22), wherein each data aggregation rule (38) is applied to the content (22) based on the position (28) of the cursor (26) to group data items (24) in the content (22) into data aggregations (34); and
displaying the one or more data aggregations (34).

2. The method of claim 1, wherein the at least one data aggregation rule (38) determines an inclusion and an order of each data aggregation (34) within the one or more data aggregations (34) based on the position (28) of the cursor (26).

3. The method of claim 1, further comprising:
receiving an indication of a user selection of a data aggregation (34) from the one or more data aggregations (34); and
manipulating the data items (24) that are associated with the selected data aggregation (34) by executing a selected editing function (33) on the respective group of data items (24) corresponding to the selected data aggregation (34).

4. The method of claim 3, further comprising determining one or more editing functions including the selected editing function (33) based on an application that generated the content (22).

5. The method of claim 3, further comprising moving the respective group of data items associated with the selected data aggregation (34) within different portions of an application executable to generate the content (22).

6. The method of claim 3, wherein the selected editing function (33) comprises at least one of a group of a cut operation, a copy operation, or a paste operation.

7. The method of claim 3, further comprising generating a list of at least one editing function (33) based on the selected data aggregation (34).

8. The method of claim 3, wherein the group of data items corresponding to the selected data aggregation (34) further corresponds to a first application, and wherein execution of the selected editing function results in the group of data items corresponding to the selected data aggregation (34) becoming associated with a second application.

9. The method of claim 1, wherein the generating the one or more data aggregations (34) comprises generating the one or more data aggregations (34) by applying the at least one data aggregation rule (38) in response to reception of an indication of a user selection of an editing function.

10. The method of claim 1, wherein the at least one data aggregation rule (38) defines a first group of the plurality of data items corresponding to a word, a second group of the plurality of data items corresponding to a sentence, and a third group of the plurality of data items corresponding to a paragraph.

11. The method of claim 1, further comprising:
generating, by an application, the content (22), wherein the at least one data aggregation rule (38) comprises a plurality of data aggregation rules (38) each corresponding to one of a plurality of applications; and
executing a selected one of the plurality of data aggregation rules (38) based on the application that generates the content (22).

12. The method of claim 1,
wherein the at least one data aggregation rule (38) further comprises a plurality of element aggregation rules (82) each defining one of a plurality of different data aggregations (34),
wherein a plurality of editing functions (33) each correspond to at least one of the plurality of different data aggregations, and
wherein the method further comprises generating a list of editing functions based on the respective data aggregations (34) of the plurality of data aggregations (34).

13. The method of claim 1, wherein each of the plurality of data items comprises at least one of a group of a character, a number, a universal resource locator, an email address, a phone number, an audio file, a video file, or a graphics file.

14. A computer program product, comprising a computer-readable medium comprising at least one instruction for causing a computer to perform a method in accordance with any of claim 1 to 13.

15. An apparatus, comprising means for performing a method in accordance with any of claims 1 to 13.
